# EUROPEAN PATENT SPECIFICATION

(11) **EP 3 436 311 B1**
(45) Date of publication and mention of the grant of the patent: **04.12.2024**
(21) Application number: 17716004.1
(22) Date of filing: 31.03.2017
(51) Int. Cl.: B60R 16/023, B60R 16/03, B60Q 11/00

(54) **A CURRENT LOAD CIRCUIT, ELECTRICAL SUPPLY SYSTEM AND VEHICLE**
EIN STROMBALLASTSCHALTUNG, ELEKTRISCHES VERSORGUNGSSYSTEM UND FAHRZEUG
CIRCUIT A RESISTANCE DE CHARGE, SYSTÈME D'ALIMENTATION ÉLECTRIQUE ET VEHICULE

(30) Priority: 01.04.2016 GB 201605641
(43) Date of publication of application: 06.02.2019
(73) Proprietor: Haldex Brake Products Aktiebolag, 261 24 Landskrona (SE)
(72) Inventor: HORTON, Steven, Lindely Warwickshire CV13 6DE (GB)
(74) Representative: Forresters IP LLP
(86) International application number: PCT/GB2017/050927
(87) International publication number: WO 2017/168179

(56) References cited:
- EP-A1- 2 000 358
- EP-A1- 2 469 978
- DE-B3- 102009 052 690
- US-A1- 2005 242 822
- US-A1- 2007 152 502
- US-B1- 7 642 743

## Description

Embodiments of the present invention relate to a current load circuit for a vehicle, a vehicle electrical supply system, and a vehicle. In some embodiments, the current load circuit provides a regulated load for a vehicle electrical system so that a control device of the vehicle correctly detects the presence of an element whilst the current load circuit dissipates less power than some conventional circuits.

Some vehicle electrical systems (such as an antilock brake system for a trailer configured to be towed by a truck) require a defined current load in order to confirm the correct operation or connection of one or more parts of the electrical system. For example, some vehicle braking systems for vehicles comprising a truck and trailer combination require a current load to be applied to the truck ignition line in order to confirm the connection of a braking system of the trailer. This load may be required during the starting of the vehicle as well as for a period of operation of the vehicle (e.g. as the vehicle is travelling).

Accordingly, a resistor is commonly used to provide the current load. For example, a braking system of a trailer may include a resistor which draws current from the ignition line when the braking system of the trailer is connected to the truck.

Other instances in which this may occur includes parts of the vehicle electrical system which were originally designed for incandescent lamp. Many such systems require a relatively large current to be drawn by the incandescent lamp in order to indicate that a working incandescent lamp has been connected correctly. Subsequent retrofitting of LED lamps, however, mean that the same magnitude of current is no longer drawn and the vehicle electrical system may, therefore, cease the supply of electrical power to the lamp and/or issue an indication that the lamp is not functioning. This is conventionally resolved by providing a ballast resistor.

The resistors used in these examples draw current sufficient to satisfy the requirements of the vehicle electrical system but often perform no other useful function. A significant amount of power may be dissipated through the resistors.

Therefore, for the braking system example, a resistor value may be selected based on a cranking voltage of the vehicle (to ensure that the current load is sufficiently high even when the voltage on the ignition line is relatively low). However, the voltage on the ignition line will be much higher at other times (such as when a battery of the vehicle is being charged, e.g. using an alternator or other charging system). These periods of operation at a higher voltage may be much longer than the periods during which the ignition line is at a lower voltage. Therefore, the current drawn by the resistor may be higher than is necessary for a long period of time. For example, the current load required by the vehicle electrical system may be 80mA and the vehicle cranking voltage may be 16V. Therefore, a resistor of 200 Ohms would be needed (i.e. 16/0.08). However, during charging, the ignition line voltage may be 32V. Thus, the power loss through the resistor would be 5W (i.e. 32²/200), which may be dissipated for substantially the entire time the vehicle is operating.

In both examples, the resistors dissipate the power as waste heat. Typically, the higher the current required, the lower the resistance required and the more power which must be dissipated, requiring a physically larger resistor. Therefore, not only is there an issue of inefficient use of electrical power but there is also an issue with housing/locating the resistors, removal of the heat generated, and, of course, the cost of the resistors.

EP2469978 discloses a vehicle energy retrieving device which includes an input current detection circuit, a boost converter circuit, an output voltage detection circuit, a power source and a load end. The input current detection circuit controls input current and the boost converter circuit is electrically connected to the input current detection circuit in series and converts low voltage into high voltage. The output voltage detection circuit controls output voltage when the circuit is an open circuit. The vehicle energy retrieving device retrieves the surplus electric power and recharges the surplus electric power to the power source to improve the shortcomings of the conventional driving computer system so that when braking or driving, the driving computer system does not generate any false signals.

US 2014247005 discloses an electrical system for a tractor trailer combination.

There is a need, therefore, to alleviate the problems caused by vehicle electrical systems requiring a current load in these and similar circumstances.

Accordingly, an aspect of the present invention provides a trailer braking system current load circuit configured to provide a predetermined current load on a power line of an electrical supply system of a vehicle, the current load circuit comprising: a switching boost converter configured to be charged from the current load line and to discharge to a return line of the electrical supply system of the vehicle; and a current load control circuit configured to control the operation of the switching boost converter to maintain a current load on the current load line above a predetermined current during operation of the switching boost converter, such that a portion of the current drawn from the current load line is returned to the return line of the electrical supply system of the vehicle.

The circuit may further comprise a fault detection circuit which is configured to determine whether a voltage on the return line is below a predetermined threshold voltage and to cease operation of the switching boost converter if the voltage on the return line is below the predetermined threshold voltage.

The current load control circuit may be coupled to a current sense element which is configured to provide the current load control circuit with an indication of the current through an inductor of the switching boost converter.

The circuit may further comprise a rectifier which is configured to rectify an output of the switching boost converter.

The rectifier may be a synchronous rectifier which is configured to operate synchronously with the switching boost converter and/or may be an AC coupled rectifier.

Another aspect provides an electrical supply system of a vehicle, including: a current load line; a return line; a trailer braking system switching boost converter configured to be charged from the current load line and to discharge to the return line; and a trailer braking system current load control circuit configured to control the operation of the switching boost converter to maintain a current load on the current load line above a predetermined current during operation of the switching boost converter, such that a portion of the current drawn from the current load line is returned to the return line of the electrical supply system of the vehicle.

The electrical supply system may further comprise a fault detection circuit which is configured to determine whether a voltage on the return line is below a predetermined threshold voltage and to cease operation of the switching boost converter if the voltage on the return line is below the predetermined threshold voltage.

The current load control circuit may be coupled to a current sense element which is configured to provide the current load control circuit with an indication of the current through an inductor of the switching boost converter.

The electrical supply system may further comprise a rectifier which is configured to rectify an output of the switching boost converter.

The rectifier may be a synchronous rectifier which is configured to operate synchronously with the switching boost converter and/or may be an AC coupled rectifier.

The electrical supply system may further comprise a control device which is configured to determine whether an element is connected or correctly connected to the electrical supply system based on the current load on the current load line.

Another aspect provides a vehicle including an electrical supply system as above, further comprising a braking system.

The trailer braking system switching boost converter and trailer braking system current load control circuit may form part of the braking system.

Embodiments of the present invention are described, by way of example only, with reference to the accompanying drawings, in which:
Figure 1 shows a schematic representation of a vehicle according to some embodiments;
Figure 2 shows a schematic representation of a braking system and electrical supply system of some embodiments;
Figure 3 shows a schematic representation of a control load recovery circuit of some embodiments;
Figures 4a, 4b, and 5 show schematic representations of control load recovery circuits of some embodiments.

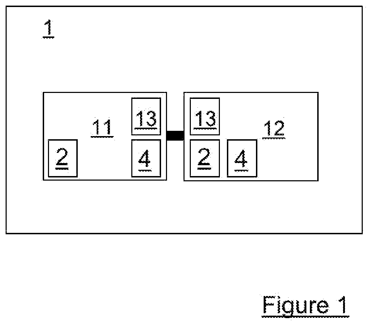

In some embodiments, see figure 1 for example, the present invention includes a vehicle 1 to which a braking system 2 has been fitted. The vehicle 1 may include a truck 11 and trailer 12, the trailer 12 being configured to be towed by the truck 11. The braking system 2 may, therefore, include a portion which is part of the truck 11 and a portion which is part of the trailer 12. Other configurations of braking system 2 and vehicle 1 may, however, be used in other embodiments.

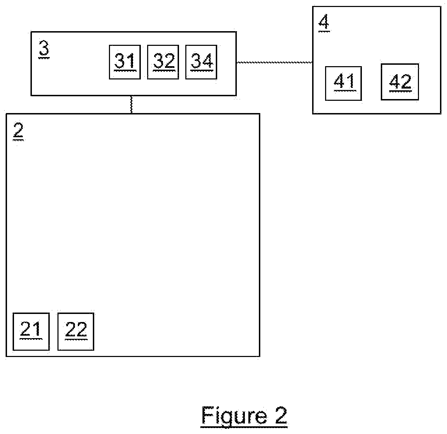

The braking system 2, with reference to figure 2, includes a brake module 21 which is configured, on actuation, to apply a braking force to one or more ground engaging wheels of the vehicle 1 (e.g. of the truck 11 and/or trailer 12) in order to slow the vehicle 1 and/or substantially prevent its movement. The braking system 2 may also include a braking system load recovery circuit 22.

The vehicle 1 may, in some embodiments, include a lighting system 4 which may be part of the truck 11, part of the trailer 12, or part of both the truck 11 and the trailer 12 (see figure 2, for example). The lighting system 4 may include, for example, one or more lamps 41 which are configured to light an area or volume around at least part of the vehicle 1 and/or to provide an indication of the operation or intended operation of the vehicle 1 (such as brake lights, turn signals, etc.). The lighting system 4 may also include a lighting system load recovery circuit 42.

The vehicle 1 includes an electrical supply system 3, see figure 2, which is configured to provide electrical power to one or more units of the vehicle 1, including the braking system 2 and the lighting system 4, if provided.

The electrical supply system 3 may include a battery 31 and a generation system 32 (such as an electrical alternator or other generator) which is configured to generate electricity using mechanical power generated by an engine of the vehicle 1, for example. The electrical supply system 3 may include an ignition or other current load line 34 which is configured, with a ground line, to supply electricity to the one or more units of the vehicle 1. In this instance, the voltage of the electricity supplied through the electrical supply system 3 may be 12V, 24V, or 32V, for example. The battery 31 - if provided - may be configured to provide electrical power at any one of these voltages.

The braking system 2 and/or the lighting system 4 are configured to be connected in electrical communication with the electrical supply system 3 such that electrical power from the electrical supply system 3 is provided to the braking system 2 and/or lighting system 4. Accordingly, the ignition or other current load line 34 may be connected to the braking system 2 and/or the lighting system 4.

The vehicle 1 may further include one or more control devices 13 which are each configured to control an aspect of the operation of the vehicle 1. This may include, for example, determining whether the braking system 2 (or a part thereof) is correctly connected. Thus, a control device 13 of the one or more control devices 13 may be configured to determine whether a part of the braking system 2 associated with the trailer 12 is correctly connected to a part of the braking system 2 associated with the truck 11. Similarly, the one or more control devices 13 may include a control device which is configured to determine whether a part of the lighting system 4 is correctly fitted and/or operating correctly. Thus, for example, the control device 13 may be configured to determine if a lamp 41 is fitted to the lighting system 4 and/or if the lamp 41 is operating correctly.

The or each control device 13 may use a current load to determine whether the braking system 2 (or a part thereof) is correctly connected and/or to determine if a lamp 41 is correctly fitted and/or functioning correctly.

The braking system load recovery circuit 22 and the lighting system load recovery circuit 42 may each be configured to provide the current load expected by the associated control device 13 such that the control device 13 can determine that the braking system 3 (or a part thereof) is correctly connected and/or if the lamp 41 is correctly fitted and/or functioning correctly.

The braking system load recovery circuit 22 and the lighting system load recovery circuit 42 may operate in a corresponding manner and embodiments will, therefore, be described with reference to a single load recovery circuit 22/42 which could be implemented as either of the braking system or lighting system load recovery circuit 22. Of course, the same or a similar load recovery circuit 22/42 could be used in other situations in which a current load is required in part of a vehicle 1 in order to indicate the presence of a part of the vehicle 1, the correct connection of that part, and/or the correct functioning of that part.

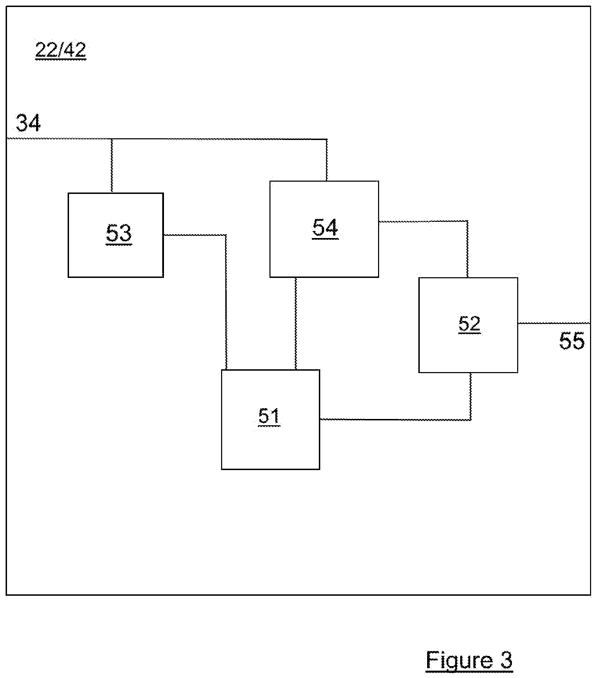

With reference to figure 3, the load recovery circuit 22/42 is configured to receive electrical power from an ignition or other current load line 34. A current load control circuit 53 is coupled in electrical communication with the ignition or other current load line 34 and is configured to determine, selectively, whether the electrical power is delivered to a switching boost converter 51 of the load recovery circuit 22/42.

The switching boost converter 51 is configured to use the electrical power from the ignition or other current load line 34 in order to provide a return current to a battery return line 55.

The current load control circuit 53 is further configured to ensure that the current drawn from the ignition or other current load line 34 exceeds a predetermined current load during operation of the switching boost converter 51. The current load control circuit 53 may be further configured to control the operation of the switching boost converter 51 to moderate the current drawn from the ignition or other current load line 34 (i.e. the current load) is greater than the predetermined current load and may be configured to control the operation of the switching boost converter 51 to moderate the current drawn from the ignition or other current load line 34 below a further predetermined current load. In some embodiments, the current load control circuit 53 is configured to ensure that the current drawn from the ignition or other current load line 34 is substantially the predetermined current load during operation of the switching boost converter 51. Accordingly, when the switching boost converter 51 is being discharged (i.e. an inductor 513 of the switching boost converter 51 is discharging), the current load control circuit 53 may couple a resistive load to the ignition or other current load line 34 to maintain the current load on the ignition or other current load line 34. In some embodiments, the current drawn from the ignition or other current load line 34 may be substantially continuous but may include a degree of ripple. The current is, as will be understood, pulsed in the battery return line 55 during operation of embodiments.

The switching boost converter 51 may be connected in electrical communication with a rectifier circuit 52 which may be configured to ensure that the output voltage of the switching boost converter 51 with respect to the ground line is the correct polarity to charge a battery 31 connected to the battery return line 55 - i.e. a positive voltage with respect to the ground line.

The rectifier circuit 52 may, accordingly, also form part of the load recovery circuit 22/42.

The load recovery circuit 22/42 may further include a fault detection circuit 54 which is configured to detect a fault situation and to terminate operation of the switching boost converter 51 in the event of a detected fault situation. In particular, the fault detection circuit 54 may be configured to detect a low voltage on the battery return line 55 (with respect to the ground line) which may indicate, for example, that the battery 31 has become disconnected, discharged or is faulty. In such a fault situation, operation of the switching boost converter 51 is ceased with the aim of reducing the risk of the load recovery circuit 22/42 becoming the main source of electrical power for one or more other parts of the vehicle 1.

Thus, in operation, the current load control circuit 53 operates to maintain a current load which is greater than or equal to the predetermined current load, whilst operating the switching boost converter 51 to return a part of the electrical power drawn from the ignition or other current load line to a battery return line 55 to which the battery 31 may be connected. As such, compared to many prior systems, this arrangement may result in less wasted power, for example. The efficiency of the operation of some embodiments may be over 90% in some instances, so instead of 5W dissipated by some conventional systems the power dissipated may be as low as about 0.5W.

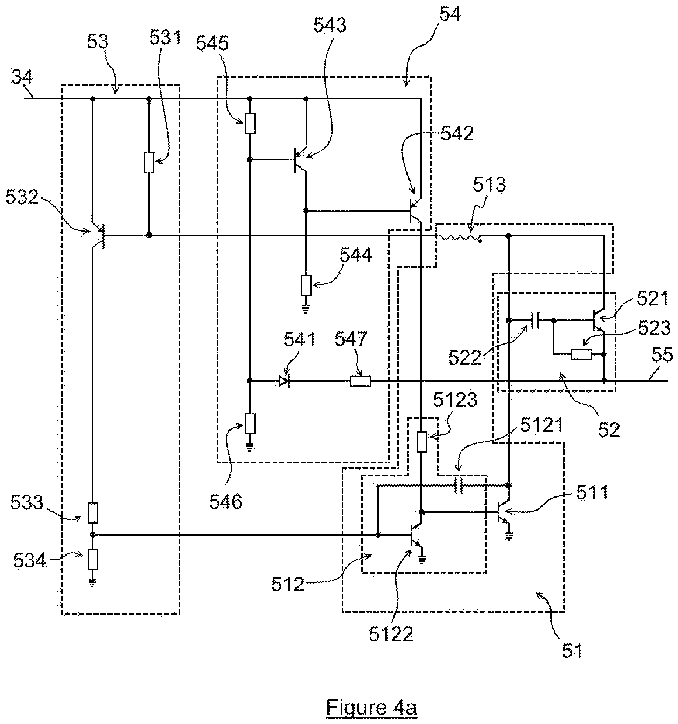

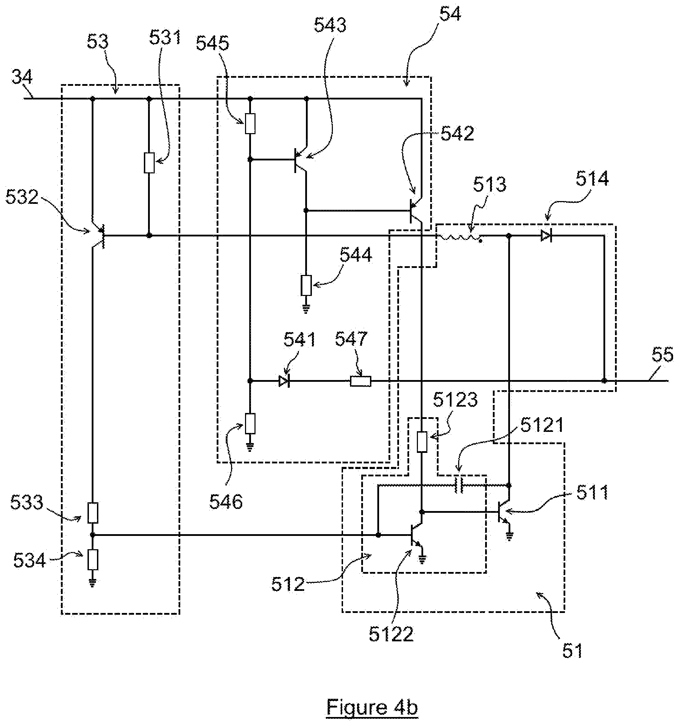

Accordingly, reference is now made to the example embodiment in figure 4 with this figure used to describe the operation of the depicted embodiment but also other embodiments of the invention.

In this example embodiment, the current load control circuit 53 includes a current sense element 531 which may be configured to sense the current draw by the switching boost converter 51 (e.g. in the charging of an inductor 513 thereof). The current sense element 531 may be coupled to a control switch device 532 of the current load control circuit 53 which is configured to be actuated between an on and an off state. When in the on-state, the control switch device 532 is configured to couple the ignition or other current load line 34 in electrical communication with the switching boost converter 51 and, in particular, with a drive circuit 512 of the switching boost converter 51. When in the off-state, the control switch device 532 is configured to disconnect the ignition or other current load line 34 from the switching boost converter 51 and, in particular, from the drive circuit 512 of the switching boost converter 51.

In some embodiments, the current sense element 531 is a relatively low value resistor (e.g. 7.5 or 15 Ohms) and the control switch device 532 is a transistor device which may be a PNP transistor. The current sense element 531 may, therefore, be connected between the base of the control switch device 532 and the ignition or other current load line 34. The emitter of the control switch device 532 may be connected to the ignition or other current load line 34 and the collector of the control switch device 532 may be connected to the ground line via one or more resistors. The one or more resistors may include a first resistor 533 and a second resistor 534, such that the switching boost converter 51 (e.g. the drive circuit 512 of the switching boost converter 51) is connected in electrical communication between the first and second resistors 533,534 - which may, as will be understood, form part of a level translator.

The base of the control switch device 532 may be further connected to the switching boost converter 51 and, in particular, to the inductor 513 of the switching boost converter 51.

When the inductor 513 of the switching boost converter 51 is uncharged or below an energy threshold, as determined by the current sense element 531, the control switch device 532 is in its off-state. In other words, as the current through the current sense element 531 is less than a threshold current (set by the resistance of the current sense element), the control switch device 532 is in its off-state. As the level of energy stored in the inductor 513 rises, the current through the current sense element 531 will increase until the threshold current is exceeded. This will cause the control switch device 532 to adopt its on-state.

With the control switch device 532 in its on-state, the switching boost converter 51 will discharge the inductor 513 to the return line 55 - as described below.

The switching boost converter 51 may include the drive circuit 512 which is configured to drive the operation of a main switch device 511 of the switching boost converter 51 - the main switch device 511 controlling whether the inductor 513 is charged or discharged. As will be appreciated, the inductor 513 in the switching boost converter 51 is an example of an energy storage element configured to be charged and discharged during operation of the switching boost converter 51.

The current drive circuit 512 may include a drive switch device 5122 which is configured to control the operation of the main switch device 511 of the switching boost converter 51. Accordingly, the drive switch device 5122 may include a transistor device. The drive switch device 5122 may be connected to the ignition or other current load line via at least part of the fault detection circuit 54.

In some embodiments, the drive switch device 5122 is a transistor device which may be an NPN transistor. The emitter of the drive switch device 5122 may be connected in electrical communication with the ground line, and the collector of the drive switch device 5122 may be connected in electrical communication with the fault detection circuit 54, which may be via a resistor 5123. The base of the drive switch device 5122 may be coupled in electrical communication with the current load control circuit 53 such that the current load control circuit 53 is configured to control its operation. The connection of the base of the drive switch device 5122 may be to the potential divider formed by the first and second resistors 533,534 of the current load control circuit 53, for example.

Accordingly, as will be understood, the actuation of the drive switch device 5122 between an on and an off state is controlled by the current load control circuit 53.

A coupling capacitor 5121 of the drive circuit 512 may couple the base of the drive switch device 5122 to the collector of the main switch device 511 - see below. The coupling capacitor 5121, if included, provides positive feedback which speeds up the switching of the main switch device 511 and which may improve efficiency.

The main switch device 511 is configured to be actuated by on and off states by the drive switch device 5122. With the drive switch device 5122 in its on-state (determined by the control switch device 532 being in its on-state), the main switch device 511 is configured to be in its off-state. With the drive switch device 5122 in its off-state (determined by the control switch device 532 being in its off-state), the main switch device 511 is configured to be in its on-state.

When in the on-state, the main switch device 511 is configured to cause the charging of the inductor 513 of the switching boost converter 51 and, when in the off-state, the main switch device 511 is configured to cause the discharging of the inductor 513 of the switching boost converter 51.

The main switch device 511 may be a transistor device and may be an NPN transistor. The emitter of the main switch device 511 may be connected in electrical communication with the ground line, the base may be connected in electrical communication with the collector of the drive switch device 5122, and the collector may be connected in electrical communication with the inductor 513.

The switching boost converter 51 may include a diode 514 (see figure 4b) which is also connected in electrical communication with the inductor 513, and the main switch device 511 (e.g. with the collector thereof). The diode 514 may also be connected in electrical communication with the battery return line 55.

In some embodiments, a rectifier circuit 52 is provided instead of or in addition to the diode 514 (see figure 4a). The rectifier circuit 52 may be configured to operate synchronously with the switching boost converter 51. In some embodiments, the rectifier circuit 52 is an AC coupled synchronous rectifier.

Accordingly, in some embodiments, the rectifier circuit 52 is configured to be actuated to an on-state (in which a current is permitted to pass to the battery return line 55) by an output of the main switch device 511. As such, the rectifier circuit 52 may include an active switch device 521 which is coupled to the main switch device 511 and configured to be actuated in accordance therewith. This coupling may be via a capacitor 522. The active switch device 521 may be a transistor device and may be an NPN transistor. Accordingly the base of the active switch device 521 may be coupled in electrical communication with the collector of the main switch device 511, e.g. via the capacitor 522. The base and the emitter of the active switch device 521 may be coupled in electrical communication via a resistor 523, for example. The emitter of the active switch device 521 may be further connected in electrical communication with the battery return line 55 and the collector of the active switch device 521 may be connected in electrical communication with the inductor 513 such that, when the active switch device 521 is in its on-state current is allowed to pass from the inductor 513, through the rectifier circuit 52, and to the battery return line 55.

The diode 514 also, as will be understood, serves as a rectification circuit. Therefore, may be referred to herein as an alternative to the rectifier circuit 52 and references to the rectifier circuit 52 may be references to a rectifier circuit of which the rectifier circuit 52 in figure 4a is one example and the diode 514 of figure 4b is another.

When the main switch device 511 is in its on-state, the active switch device 521 may be in its off-state (such that the inductor 513 does not discharge through the diode 514/rectifier circuit 52) and with the main switch device 511 in its off-state, current may pass through the diode 514 or the active switch device 521 may be in its on-state and current may pass therethrough to the return line 55.

As will be appreciated, with the control switch device 532 is in its off-state, the drive switch device 5122 is in its off-state (as a result of the second resistor 534). The main switching device 511 is consequently in its on-state by virtue of the current through the fault detection circuit 54 (e.g. through a shutdown switch device 542, see below) and the resistor 5123.

The current through the inductor 513 rises and, when the current through the current sense element 531 increases to exceed the threshold current, this will cause the control switch device 532 to adopt its on-state.

With the control switch device 532 in its on-state, the drive switch device 5122 will be actuated to its on-state which, in turn, causes the main switch device 511 to actuate to its off-state.

The energy in the inductor 513 will dissipate by delivering current to the rectifier circuit 52 and/or the diode 514. The current through the rectifier circuit 52 and/or diode 514 will, therefore, rise as the energy stored in the inductor 513 decays. Accordingly, the inductor 513 returns current to the return line 55 (e.g. through the rectifier circuit 52 and/or diode 514).

As a result of the operation of some embodiments, the current drawn from the current load line 34 is substantially continuous but the current returned to the battery return line 55 is intermittent (but at a higher voltage).

The fault detection circuit 54 is configured to compare a voltage on the battery return line 55 with a further voltage (which may be a predetermined voltage and/or which may be dependent on the voltage of the ignition or other current load line 34). If the voltage on the battery return line 55 is sufficiently low, then the fault detection circuit 54 is configured to cease the operation of the main switch device 511. This may be achieved, for example, by altering the operation of the drive circuit 512 (e.g. the drive switch device 5122). In particular, the fault detection circuit 54 may be configured to disconnect the collector of the drive switch device 5122 from the ignition or other current load line 34 on detection of a fault.

The fault detection circuit 54 may include a shutdown switch device 542 which is configured to cause the operation of the main switch device 511 to cease and may include a drive shutdown switch device 543 which is configured to drive the operation of the shutdown switch device 542. The shutdown and drive shutdown switch devices 542,543 may include transistor devices and may both be PNP transistors.

Accordingly, the emitter of the shutdown switch device 542 may be connected in electrical communication with the ignition or other current load line 34, the collector of the shutdown switch device 542 may be connected in electrical communication with the main switch device 511 (e.g. the base thereof and may be via the resistor 5123) and the drive circuit 512 (e.g. with the drive switch device 5122 and maybe with the collector thereof, and maybe via the resistor 5123). The base of the shutdown switch device 542 may be connected in electrical communication with the drive shutdown switch device 543 (e.g. in particular, with the collector thereof). The collector of the drive shutdown switch device 543 may be further connected in electrical communication with the ground line (e.g. via a resistor 544), and the emitter may be connected in electrical communication with the ignition or other current load line 34. The base of the drive shutdown switch device 543 may be connected in electrical communication with a reference voltage and the battery return line 55. The reference voltage may be provided by the ignition or other current load line 34. If the battery return line voltage is sufficiently high, then the drive shutdown switch device 543 controls the shutdown switch device 542 to maintain the operation of the main switch device 511 and, hence, the switching boost converter 51. If, however, the battery return line voltage drops sufficiently, then the drive shutdown switch device 543 controls the shutdown switch device 542 to cease the operation of the main switch device 511 and, hence, the switching boost converter 51. Accordingly, the base of the drive shutdown switch device 543 may be connected in electrical communication with the battery return line 55, via a first resistor 545 to the ignition or other current load line 34, and via a second resistor 546 to the ground line.

A protective diode 541 and return line resistor 547 may be provided in series on the battery return line 55 between the rectifier circuit 52 connection to the battery return line 55 and rest of the fault detection circuit 54. If the battery return line 55 voltage is sufficiently high for the drive shutdown switch device 543 to control the shutdown switch device 542 to maintain the operation of the main switch device 511 and, hence, the switching boost converter 51, then the protective diode 541 will not conduct.

In some embodiments, the fault detection circuit 54 may be configured to turn off the shutdown switch device 542, if the current load line 34 voltage exceeds a voltage threshold (this may occur, for example, as a result of load dump transients). In some embodiments, the voltage threshold may be defined by a plurality of resistors - such as the first resistor 545 and the second resistor 546 - which may form a potential divider.

Accordingly, if the voltage of current load line 34 exceeds the threshold voltage then the drive shutdown switch device 543 controls the shutdown switch device 542 to cease the operation of the main switch device 511 and, hence, the switching boost converter 51.

As will be appreciated, in accordance with some embodiments, the current load is provided on the ignition or other current load line 34 and yet a portion of the current is returned to the battery return line 55 - to recharge the battery 31. Accordingly, some embodiments provide more energy efficient mechanisms for providing the current load than some prior systems. In addition, some embodiments eliminate or substantially reduce the need to provide large ballast resistors in order to achieve the required current load. Furthermore, some embodiments, provide the current load over a relatively wide range of voltages on the current load line 34 and/or return line 55, such that the current load is provided during the voltages on the ignition or other current load line 34 which are likely to be encountered during cranking of the vehicle 1 and also during normal operation of the vehicle 1 - that current load being the predetermined current load and substantially the same over this range of voltages.

The fault detection circuit 54 which may be included in some embodiments, helps to ensure that the load recovery circuit 22/42 is not used to power unintended parts of the vehicle 1 which may draw an excessive current from the load recovery circuit 22/42 if the battery 31 is not present or is overly discharged and/or to disable the load recovery circuit 22/41 if the current load line 34 and/or return line 55 voltage exceeds a respective threshold.

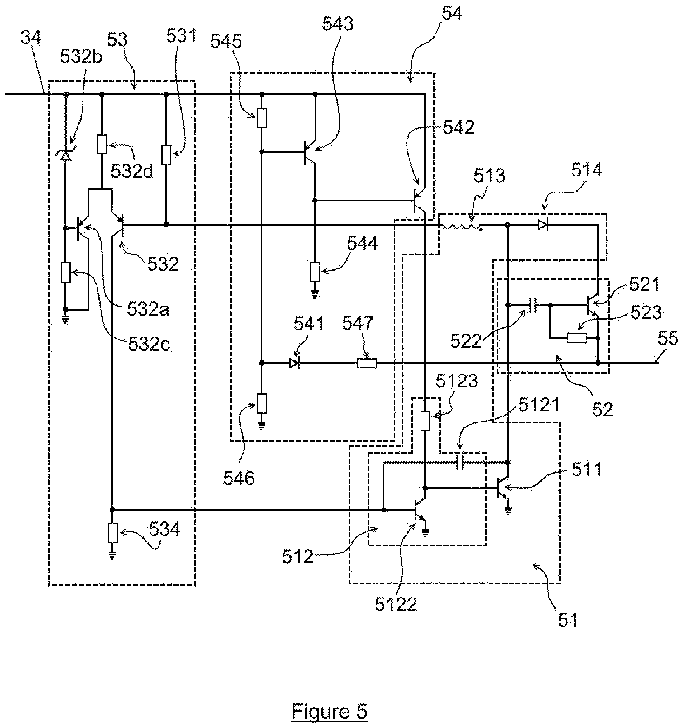

An alternative embodiment is depicted in figure 5. This embodiment is similar to the embodiment of figure 4 and like parts have been provided with like reference numerals. However, in accordance with this embodiment, and some other embodiments, the current load control circuit 53 takes a different form. In particular, the first resistor 533 is not used but a resistor 532d is provided instead to provide a tail current. The control switch device 532 is supplemented with a further control switch device 532a. Again the further control switch device 532a may be a transistor device and may be a PNP transistor device. The emitters of the control switch device 532 and further control switch device 532a may be connected together in electrical communication and coupled via the resistor 532d to the ignition or other current load line 34. The base of the further control switch device 532a may be coupled in electrical communication with the ground line and, via a first resistor 532c (to provide a bias and base current for the further control switch device 532a). The base of the further control switch device 532a may be further coupled in electrical communication via a Zener diode 532b to the ignition or other current load line 34. Accordingly, in some embodiments, a bandgap diode (e.g. the Zener diode 532b) is provided to achieve a regulated current drawn from the ignition or other current load line 34. In addition, in this and some other embodiments, the coupling capacitor 5121 of the drive circuit 512 of the switching boost converter 51 (see above) may be provided. This coupling capacitor 5121 may be provided to seek to improve switching efficiency, for example.

The embodiments of figures 4a, 4b and 5, and some other embodiments, provide a regulated current load control circuit 53. In some embodiments, the regulated current load control circuit 53 of figure 5 is more tolerant to variations in the voltage of the ignition or other current load line 34 and/or temperature variations than the embodiments of figures 4a and 4b.

Figure 5 shows the provision of both the diode 514 and the rectifier circuit 52. As discussed above, in some variations only one of the diode 514 and rectifier circuit 52 may be provided.

As explained above, the load recovery circuit 22/42 may be used as a braking system load recovery circuit 22 or a lighting system load recovery circuit 42.

A vehicle 1 may include one or more such load recovery circuits 22/42. In some embodiments, the truck 11 may include one or more such load recovery circuits 22/42. In addition or alternatively, the trailer 12 may include one or more such load recovery circuits 22/42.

Embodiments of the invention have been described with reference to lighting and braking systems. However, it will be appreciated that embodiments may be used in relation to other elements and systems which are configured to be connected to the electrical supply system of a vehicle.

In some embodiments, the current drawn from the ignition or other current load line 34 is less than 100mA. In some embodiments, the current drawn from the ignition or other current load line 34 is about 80mA. The load recovery circuit 22/42 of some embodiments may be configured to return a substantial part of this current to the return battery line 55 (for example, about 85%-95% of the load current from the current load line 34 may be returned in some embodiments). In some other embodiments, e.g. for lighting applications, the current from the current load line 34 could be higher with, in some embodiments, a similar proportion returned.

As will be appreciated, therefore, the operation of the current load circuit 22/42 of embodiments provides a regulated current load which may use pulse width modulation to maintain a substantially constant current load via an inductor 513 which is used to provide a return current.

Although the return line has been described as a battery return line 55, the return line could be for another part of the vehicle electrical supply system 3. When used in this specification and claims, the terms "comprises" and "comprising" and variations thereof mean that the specified features, steps or integers are included. The terms are not to be interpreted to exclude the presence of other features, steps or components.

## Claims

1. A trailer braking system current load circuit (22,42) configured to provide a predetermined current load on a current load line (34) of an electrical supply system of a vehicle (1), the current load circuit (22,42) comprising:
a switching boost converter (51) configured to be charged from the current load line (34) and to discharge to a return line (55) of the electrical supply system of the vehicle (1); and
a current load control circuit (53) configured to control the operation of the switching boost converter (51) to maintain a current load on the current load line (34) above a predetermined current during operation of the switching boost converter (51), such that a portion of the current drawn from the current load line (34) is returned to the return line (55) of the electrical supply system of the vehicle (1).

2. A circuit (22,42) according to claim 1, further comprising a fault detection circuit (54) which is configured to determine whether a voltage on the return line (55) is below a predetermined threshold voltage and to cease operation of the switching boost converter (51) if the voltage on the return line (55) is below the predetermined threshold voltage.

3. A circuit (22,42) according to claim 1 or 2, wherein the current load control circuit (53) is coupled to a current sense element (531) which is configured to provide the current load control circuit (53) with an indication of the current through an inductor of the switching boost converter (51).

4. A circuit (22,42) according to any preceding claim, further comprising a rectifier (52) which is configured to rectify an output of the switching boost converter (51).

5. A circuit (22,42) according to claim 4, wherein the rectifier (52) is a synchronous rectifier (52) which is configured to operate synchronously with the switching boost converter (51) and/or is an AC coupled rectifier (52).

6. An electrical supply system of a vehicle (1), including:
a current load line (34);
a return line (55);
a trailer braking system switching boost converter (51) configured to be charged from the current load line (34) and to discharge to the return line (55); and
a trailer braking system current load control circuit (53) configured to control the operation of the switching boost converter (51) to maintain a current load on the current load line (34) above a predetermined current during operation of the switching boost converter (51), such that a portion of the current drawn from the current load line (34) is returned to the return line (55) of the electrical supply system of the vehicle (1).

7. An electrical supply system according to claim 6, further comprising a fault detection circuit (54) which is configured to determine whether a voltage on the return line (55) is below a predetermined threshold voltage and to cease operation of the switching boost converter (51) if the voltage on the return line is below the predetermined threshold voltage.

8. An electrical supply system according to claim 6 or 7, wherein the current load control circuit (53) is coupled to a current sense element (531) which is configured to provide the current load control circuit (53) with an indication of the current through an inductor of the switching boost converter (51).

9. An electrical supply system according to any of claims 6 to 8, further comprising a rectifier (52) which is configured to rectify an output of the switching boost converter (51).

10. An electrical supply system according to claim 9, wherein the rectifier (52) is a synchronous rectifier (52) which is configured to operate synchronously with the switching boost converter (51) and/or is an AC coupled rectifier (52).

11. An electrical supply system according to any of claims 6 to 10, further comprising a control device (13) which is configured to determine whether an element is connected or correctly connected to the electrical supply system based on the current load on the current load line (34).

12. A vehicle (1) including an electrical supply system according to any of claims 6 to 11, further comprising a braking system (2).

13. A vehicle according to claim 12, wherein the trailer braking system switching boost converter (51) and trailer braking system current load control circuit (22,42) form part of the braking system (2).

## Patentansprüche

1. Anhängerbremssystemstromlastschaltung (22, 42), die konfiguriert ist, um eine vorgegebene Stromlast in einer Stromlastleitung (34) eines Elektrizitätsversorgungssystems eines Fahrzeugs (1) bereitzustellen, wobei die Stromlastschaltung (22, 42) Folgendes umfasst:
einen Aufwärtsschaltwandler (51), der konfiguriert ist, um aus der Stromlastleitung (34) aufgeladen zu werden und sich in eine Rückleitung (55) des Elektrizitätsversorgungssystems (1) zu entladen; und
eine Stromlaststeuerschaltung (53), die konfiguriert ist, um den Betrieb des Aufwärtsschaltwandlers (51) zum Aufrechterhalten einer Stromlast in der Stromlastleitung (34) über einem vorgegebenen Strom während des Betriebs des Aufwärtsschaltwandlers (51) zu steuern, sodass ein Teil des aus der Stromlastleitung (34) gezogenen Stroms in die Rückleitung (55) des Elektrizitätsversorgungssystems des Fahrzeugs (1) zurückgespeist wird.

2. Schaltung (22, 42) nach Anspruch 1, die ferner eine Fehlererkennungsschaltung (54) umfasst, die konfiguriert ist, um zu bestimmen, ob eine Spannung in der Rückleitung (55) unter einem vorgegebenen Spannungsschwellenwert liegt, und den Betrieb des Aufwärtsschaltwandlers (51) zu beenden, wenn die Spannung in der Rückleitung (55) unter dem vorgegebenen Spannungsschwellenwert liegt.

3. Schaltung (22, 42) nach Anspruch 1 oder 2, wobei die Stromlaststeuerschaltung (53) mit einem Stromerfassungselement (531) gekoppelt ist, das konfiguriert ist, um der Stromlaststeuerschaltung (53) eine Anzeige des Stroms durch eine Spule des Aufwärtsschaltwandlers (51) bereitzustellen.

4. Schaltung (22, 42) nach einem der vorhergehenden Ansprüche, die ferner einen Gleichrichter (52) umfasst, der konfiguriert ist, um eine Ausgangsspannung des Aufwärtsschaltwandlers (51) gleichzurichten.

5. Schaltung (22, 42) nach Anspruch 4, wobei der Gleichrichter (52) ein Synchrongleichrichter (52), der konfiguriert ist, um gleichzeitig mit dem Aufwärtsschaltwandler (51) betrieben zu werden, und/oder ein AC-gekoppelter Gleichrichter (52) ist.

6. Elektrizitätsversorgungssystem eines Fahrzeugs (1), das Folgendes enthält:
eine Stromlastleitung (34);
eine Rückleitung (55);
einen Anhängerbremssystem-Aufwärtsschaltwandler (51), der konfiguriert ist, um aus der Stromlastleitung (34) aufgeladen zu werden und sich in die Rückleitung (55) zu entladen; und
eine Anhängerbremssystem-Stromlaststeuerschaltung (53), die konfiguriert ist, um den Betrieb des Aufwärtsschaltwandlers (51) zum Aufrechterhalten einer Stromlast in der Stromlastleitung (34) über einem vorgegebenen Strom während des Betriebs des Aufwärtsschaltwandlers (51) zu steuern, sodass ein Teil des aus der Stromlastleitung (34) gezogenen Stroms in die Rückleitung (55) des Elektrizitätsversorgungssystems des Fahrzeugs (1) zurückgespeist wird.

7. Elektrizitätsversorgungssystem nach Anspruch 6, das ferner eine Fehlererkennungsschaltung (54) umfasst, die konfiguriert ist, um zu bestimmen, ob eine Spannung in der Rückleitung (55) unter einem vorgegebenen Spannungsschwellenwert liegt, und den Betrieb des Aufwärtsschaltwandlers (51) zu beenden, wenn die Spannung in der Rückleitung unter dem vorgegebenen Spannungsschwellenwert liegt.

8. Elektrizitätsversorgungssystem nach Anspruch 6 oder 7, wobei die Stromlaststeuerschaltung (53) mit einem Stromerfassungselement (531) gekoppelt ist, das konfiguriert ist, um der Stromlaststeuerschaltung (53) eine Anzeige des Stroms durch eine Spule des Aufwärtsschaltwandlers (51) bereitzustellen.

9. Elektrizitätsversorgungssystem nach einem der Ansprüche 6 bis 8, das ferner einen Gleichrichter (52) umfasst, der konfiguriert ist, um eine Ausgangsspannung des Aufwärtsschaltwandlers (51) gleichzurichten.

10. Elektrizitätsversorgungssystem nach Anspruch 9, wobei der Gleichrichter (52) ein Synchrongleichrichter (52), der konfiguriert ist, um gleichzeitig mit dem Aufwärtsschaltwandler (51) betrieben zu werden, und/oder ein AC-gekoppelter Gleichrichter (52) ist.

11. Elektrizitätsversorgungssystem nach einem der Ansprüche 6 bis 10, das ferner eine Steuervorrichtung (13) umfasst, die konfiguriert ist, um basierend auf der Stromlast in der Stromlastleitung (34) zu bestimmen, ob ein Element mit dem Elektrizitätsversorgungssystem verbunden oder korrekt verbunden ist.

12. Fahrzeug (1), das ein Elektrizitätsversorgungssystem nach einem der Ansprüche 6 bis 11 enthält, das ferner ein Bremssystem (2) umfasst.

13. Fahrzeug nach Anspruch 12, wobei der Anhängerbremssystem-Aufwärtsschaltwandler (51) und die Anhängerbremssystem-Stromlaststeuerschaltung (22, 42) einen Teil des Bremssystems (2) bilden.

## Revendications

1. Circuit de charge électrique pour dispositif de freinage de remorque (22,42) configuré pour fournir une charge électrique prédéterminée sur une ligne de charge (34) d'un circuit d'alimentation électrique d'un véhicule (1), le circuit de charge électrique (22, 42) comprenant :
un convertisseur élévateur de commutation (51) configuré pour être chargé à partir de la ligne de charge (34) et pour décharger vers une ligne de retour (55) ; et
un circuit de commande de charge électrique (53) configuré pour commander le fonctionnement du convertisseur élévateur de commutation (51) afin de maintenir une charge électrique supérieure à niveau de courant prédéterminé sur la ligne de charge (34) lorsque le convertisseur élévateur de commutation (51) est en fonctionnement, de sorte qu'une partie du courant tiré de la ligne de charge (34) est renvoyée sur la ligne de retour (55) du circuit d'alimentation électrique du véhicule (1).

2. Circuit (22,42) selon la revendication 1, comprenant en outre un circuit de détection de défaut (54) configuré pour déterminer si une tension sur la ligne de retour (55) est inférieure à une tension seuil prédéterminée et pour désactiver le convertisseur élévateur de commutation (51) si la tension sur la ligne de retour (55) est inférieure à la tension seuil prédéterminée.

3. Circuit (22,42) selon la revendication 1 ou 2, dans lequel le circuit de commande de charge électrique (53) est couplé à un élément de détection de courant (531) configuré pour fournir des indications sur le courant au circuit de commande de charge (53) par le biais d'un inducteur du convertisseur élévateur de commutation (51).

4. Circuit (22,42) selon l'une quelconque des revendications précédentes, comprenant en outre un redresseur (52) configuré pour redresser une sortie du convertisseur élévateur de commutation (51).

5. Circuit (22,42) selon la revendication 4, dans lequel le redresseur (52) est un redresseur synchrone (52) configuré pour fonctionner de manière synchrone avec le convertisseur élévateur de commutation (51) et/ou est un redresseur couplé en courant alternatif (52).

6. Circuit d'alimentation électrique d'un véhicule (1), comprenant :
une ligne de charge électrique (34) ;
une ligne de retour (55) ;
un convertisseur élévateur de commutation de dispositif de freinage de remorque (51) configuré pour être chargé à partir de la ligne de charge électrique (34) et pour décharger vers la ligne de retour (55) ; et
un circuit de commande de charge électrique de dispositif de freinage (53) de remorque configuré pour commander le fonctionnement du convertisseur élévateur de commutation (51) afin de maintenir une charge électrique supérieure à niveau de courant prédéterminé sur la ligne de charge (34) lorsque le convertisseur élévateur de commutation (51) est en fonctionnement, de sorte qu'une partie du courant tiré de la ligne de charge (34) est renvoyée sur la ligne de retour (55) du circuit d'alimentation électrique du véhicule (1).

7. Circuit d'alimentation électrique selon la revendication 6, comprenant en outre un circuit de détection de défaut (54) configuré pour déterminer si une tension sur la ligne de retour (55) est inférieure à une tension seuil prédéterminée et pour désactiver le convertisseur élévateur de commutation (51) si la tension sur la ligne de retour (55) est inférieure à la tension seuil prédéterminée.

8. Circuit d'alimentation électrique selon la revendication 6 ou 7, dans lequel le circuit de commande de charge (53) est couplé à un élément de détection de courant (531) configuré pour donner des indications sur le courant au circuit de commande de charge (53) par le biais d'un inducteur du convertisseur élévateur de commutation (51).

9. Circuit d'alimentation électrique selon l'une quelconque des revendications 6 à 8, comprenant en outre un redresseur (52) configuré pour redresser une sortie du convertisseur élévateur de commutation (51).

10. Circuit d'alimentation électrique selon la revendication 9, dans lequel le redresseur (52) est un redresseur synchrone (52) configuré pour fonctionner de manière synchrone avec le convertisseur élévateur de commutation (51) et/ou est un redresseur couplé en courant alternatif (52).

11. Circuit d'alimentation électrique selon l'une quelconque des revendications 6 à 10, comprenant en outre un dispositif de commande (13) configuré pour déterminer si un élément est connecté ou correctement connecté au circuit d'alimentation électrique sur la base de la charge sur la ligne de charge électrique (34).

12. Véhicule (1) comprenant un circuit d'alimentation électrique selon l'une quelconque des revendications 6 à 11, comprenant en outre un dispositif de freinage (2).

13. Véhicule selon la revendication 12, dans lequel le convertisseur élévateur de commutation du dispositif de freinage de remorque (51) et le circuit de commande de charge électrique du dispositif de freinage de remorque (22,42) font partie du dispositif de freinage (2).
